# FASCICULE DE BREVET EUROPEEN

(11) **EP 3 208 482 B1**
(45) Date de publication et mention de la délivrance du brevet: **17.01.2018**
(21) Numéro de dépôt: 17153013.2
(22) Date de dépôt: 25.01.2017
(51) Int. Cl.: F16D 48/06, F16D 48/10

(54) **COMMANDE D'EMBRAYAGE DE TYPE NORMALEMENT OUVERT**
KUPPLUNGSSTEUERUNG VOM TYP NORMALERWEISE OFFEN
NORMALLY-OPEN CLUTCH CONTROL

(30) Priorité: 17.02.2016 FR 1651255
(43) Date de publication de la demande: 23.08.2017
(73) Titulaire: Valeo Embrayages, 80009 Amiens Cedex 2 (FR)
(72) Inventeur: MAUREL, Pascal, 75009 PARIS (FR)
(74) Mandataire: Cardon, Nicolas

(56) Documents cités:
- WO-A1-2015/064002
- DE-A1-102006 051 287
- DE-A1-102007 002 842
- DE-U1-202013 003 648

## Description

La présente invention concerne une commande d'embrayage de type normalement ouvert. Autrement dit, la position par défaut de cet embrayage est la position débrayée. L'embrayage est par exemple un embrayage à commande électrique ou automatique, un tel embrayage étant communément appelé « clutch by wire ». Dans un tel embrayage, il n'existe plus de lien physique entre la pédale d'embrayage et l'organe d'actionnement de l'embrayage.

L'embrayage est par exemple un embrayage simple permettant la transmission du couple entre le moteur thermique et une boîte de vitesses manuelle.

Il peut encore s'agir d'un embrayage pour l'actionnement d'un synchroniseur de boîte de vitesses pour transmission manuelle, pour l'actionnement d'une boîte de vitesses robotisée, pour l'actionnement d'une boîte de vitesses manuelle à double embrayage, ou encore pour l'actionnement d'un embrayage de couplage d'un moteur thermique avec une machine électrique lorsque ces deux derniers font partie d'un groupe motopropulseur d'un véhicule hybride.

L'embrayage peut être intégré à un véhicule permettant de réaliser un mode « roue libre » ou « coasting » selon lequel le moteur thermique est coupé lorsqu'il n'est pas sollicité, afin d'économiser du carburant.

Une défaillance dans la commande électrique de l'embrayage peut provoquer un passage intempestif de ce dernier dans la position embrayée dans laquelle il transmet le couple, notamment lorsque le mode « roue libre » précité ou le mode « rétro », c'est-à-dire un passage de rapports de boîte de vitesses décroissant, est en cours. A cause de ce passage intempestif en position embrayée, le couple transmis par l'embrayage peut devenir supérieur au couple transmissible par les roues du véhicule, entraînant alors un blocage ou un patinage de ces roues. Le conducteur du véhicule ne maîtrise alors plus la trajectoire de ce dernier sur une distance d'autant plus grande que la vitesse du véhicule est importante. Des risques élevés d'accident à la fois pour le conducteur et pour des tiers extérieurs au véhicule existent alors.

Il existe un besoin pour remédier aux inconvénients précités. Le document DE 102007002842 est considéré l'état de la technique plus proche. L'invention a pour but de répondre à ce besoin et elle y parvient, selon l'un de ses aspects, à l'aide d'une commande d'embrayage de type normalement ouvert, comprenant :
- une pédale d'embrayage,
- l'embrayage,
- un actionneur électrique, dont le déplacement permet de modifier la position de l'embrayage, cet actionneur électrique comprenant un moteur électrique d'actionneur, et
- une unité de pilotage de l'embrayage, générant des consignes visant à modifier la position de l'embrayage, notamment en réponse à une action de l'utilisateur du véhicule sur la pédale d'embrayage,
l'unité de pilotage étant configurée pour appliquer un mode de sécurité visant à empêcher le passage en position embrayée de l'embrayage lorsqu'une défaillance prédéfinie dans la commande d'embrayage est détectée, ce mode de sécurité comprenant l'arrêt de l'alimentation électrique du moteur électrique d'actionneur pour que l'embrayage occupe une position de sécurité étant la position débrayée ou une position dans laquelle le couple qu'il transmet est déterminé par les forces de frottement statique exercées par l'actionneur électrique sur cet embrayage.

L'alimentation électrique du moteur électrique d'actionneur peut se faire via un convertisseur statique mettant en oeuvre des cellules de commutation commandables, telles que des transistors ou des thyristors, et le mode de sécurité peut correspondre à l'ouverture de toutes ces cellules de commutation.

La défaillance prédéfinie correspond à une défaillance pour laquelle un passage de l'embrayage en position embrayée correspondrait à un couple transmis par l'embrayage supérieur à une valeur prédéfinie. Cette valeur prédéfinie correspond par exemple au couple maximal transmissible par les roues du véhicule étant donné le rapport de boîte de vitesses engagé et la vitesse de ce véhicule.

La défaillance prédéfinie peut être l'une des défaillances mentionnées dans la liste ci-dessous:
- perte de l'alimentation électrique du calculateur de l'unité de pilotage de l'embrayage,
- perte de la communication avec un superviseur distant fournissant des consignes de pilotage à l'unité de pilotage de l'embrayage, ce superviseur étant par exemple l'unité de contrôle moteur du véhicule (« ECU » en anglais) ou l'unité de contrôle de la transmission du véhicule (« TCU » en anglais)
- déplacement de l'embrayage vers une position davantage embrayée alors que cet embrayage est commandé vers une position plus débrayée.

Plus généralement, la défaillance dans la commande d'embrayage peut concerner l'électronique de puissance de la commande d'embrayage, c'est-à-dire le circuit transmettant les signaux de puissance pour l'alimentation électrique de l'actionneur électrique, y compris la source d'énergie électrique de ce circuit, et/ou concerner l'électronique de pilotage de la commande d'embrayage, c'est-à-dire le circuit transmettant les signaux de pilotage de cet actionneur électrique.

L'invention permet de fournir un actionneur au moins partiellement réversible. Par l'application du mode de sécurité, l'actionneur électrique n'étant plus alimenté, l'embrayage tend à revenir en position débrayée sous l'effet de moyens de rappel, tel qu'un diaphragme de l'embrayage. Ce retour vers la position débrayée de l'embrayage est empêché par les forces de frottement statique exercées par l'actionneur électrique sur cet embrayage lorsque l'actionneur n'est que partiellement réversible, de sorte que l'embrayage atteint une position d'équilibre lorsque la force de rappel devient égale à ces forces de frottement, cette position d'équilibre correspondant alors à la position de sécurité.

Lorsque l'actionneur est entièrement réversible, il peut revenir en position débrayée, de sorte que la position de sécurité est la position débrayée.

Dans le cas d'un actionneur partiellement réversible, les différents composants de l'actionneur électrique sont alors choisis de manière à ce que ces forces de frottement statique immobilisent l'embrayage dans une position dans laquelle le couple qu'il transmet correspond à un couple exercé sur les roues du véhicule qui reste inférieur à la valeur prédéfinie mentionnée ci-dessus, à savoir le couple maximal transmissible par les roues du véhicule étant donné le rapport de boîte de vitesses engagé et la vitesse de ce véhicule. Le conducteur du véhicule peut alors continuer à rouler tout en maîtrisant son véhicule, par exemple pour se garer sur le bas-côté de la route.

Le passage de l'embrayage dans la position de sécurité depuis le déclenchement du mode de sécurité peut se faire en une durée comprise entre 250 ms et 1s.

Le couple transmis par l'embrayage lorsqu'il est dans la position de sécurité peut présenter une valeur comprise entre 0 et 50 Nm. Dans le cas d'un actionneur entièrement reversible, ce couple est nul et dans le cas d'un actionneur partiellement reversible, ce couple peut être compris entre 20 Nm et 50 Nm.

Dans un exemple de mise en oeuvre, l'unité de pilotage applique le mode de sécurité lorsque la défaillance détectée dans la commande d'embrayage est susceptible de provoquer le passage en position embrayée de l'embrayage alors que la différence entre la vitesse de sortie de l'embrayage et la vitesse d'entrée de l'embrayage est supérieure à un seuil prédéfini. Une telle condition pour l'application du mode de sécurité permet d'éviter l'apparition d'un couple de freinage sur les roues du véhicule, ce couple de freinage provoquant le glissement ou le blocage de ces roues.

L'actionneur électrique peut comprendre l'un au moins des éléments suivants:
- un réducteur,
- un système de transformation roto-linéaire du mouvement du moteur électrique d'actionneur,
- un émetteur hydraulique ayant un piston dont le déplacement est commandé par le moteur électrique d'actionneur,
- un récepteur hydraulique ayant un piston et relié à l'émetteur hydraulique via une conduite hydraulique.

L'embrayage peut comprendre une fourchette d'actionnement et une butée de commande.

Le couple transmis par l'embrayage dans le mode de sécurité peut être déterminé par tout ou partie des forces de frottement statique suivantes :
- frottements internes du moteur électrique d'actionneur,
- frottements de guidage des éléments mobiles du réducteur,
- frottements de guidage des éléments mobiles du système de transformation roto-linéaire,
- frottements du piston et des joints de l'émetteur hydraulique,
- frottements du fluide hydraulique échangé entre l'émetteur hydraulique et le récepteur hydraulique sur les parois de l'émetteur hydraulique, sur le piston de cet émetteur hydraulique, sur les parois du récepteur hydraulique, sur le piston de ce récepteur hydraulique, ou encore sur les parois de la conduite hydraulique reliant cet émetteur hydraulique et ce récepteur hydraulique,
- frottements de guidage de la fourchette,
- frottements de guidage de la butée de commande.

Autrement dit, tout ou partie des forces de frottement statique ci-dessus peuvent être choisies de manière à ce que la position d'équilibre de l'embrayage dans le mode de sécurité corresponde à un couple transmis par ce dernier qui soit inférieur à la valeur prédéfinie mentionnée ci-dessus.

Dans tout ce qui précède, la défaillance dans la commande d'embrayage peut être détectée via au moins une étape de contrôle. Cette ou ces étapes de contrôle peuvent être effectuées par l'unité de contrôle moteur du véhicule (« ECU » en anglais), par l'unité de contrôle de la transmission du véhicule (« TCU » en anglais) ou par l'unité de pilotage de l'embrayage (cette dernière étant encore appelée « CCU » en anglais). Le cas échéant, certaines étapes de contrôle sont effectuées par l'un de l'ECU, du TCU et de l'unité de pilotage de l'embrayage tandis que d'autres étapes de contrôle sont effectuées par un autre de l'ECU, du TCU et de l'unité de pilotage de l'embrayage. Certaines étapes sont par exemple effectuées par l'unité de pilotage de l'embrayage et d'autres par l'ECU. En variante, certaines étapes sont effectuées par l'unité de pilotage de l'embrayage et d'autres par le TCU.

En variante, tout ou partie de ces étapes de contrôle est effectuée par l'unité de pilotage de l'embrayage. Lors de cette étape, un contrôle de la consigne de couple d'embrayage à appliquer à l'embrayage peut être effectué, et l'unité de pilotage applique le mode de sécurité en cas de détection d'une consigne de couple erronée. Cette étape consiste par exemple à reproduire deux fois la consigne de couple et à traiter les trois valeurs ainsi obtenues indépendamment dans trois adresses mémoire distinctes. Un vote de cohérence entre ces valeurs permet de déterminer si la consigne est erronée ou non.

La consigne de couple d'embrayage contrôlée provient par exemple de l'unité de contrôle moteur du véhicule, de sorte qu'une défaillance au niveau de cette unité de contrôle moteur peut ainsi être détectée. L'application du mode de sécurité se fait par exemple s'il résulte de l'étape de contrôle ci-dessus que la consigne à appliquer est erronée et si aucune consigne de substitution ne peut être calculée.

En variante ou en complément de ce qui précède, une étape de contrôle de la conversion de la consigne de couple d'embrayage en une consigne de déplacement de l'actionneur électrique peut être effectuée. En cas de conversion erronée de cette consigne de couple, l'unité de pilotage peut appliquer le mode de sécurité. La conversion de la consigne de couple d'embrayage en une consigne de déplacement de l'actionneur est par exemple effectuée à l'aide d'une cartographie évolutive, cette dernière prenant en compte l'évolution de la caractéristique réelle de l'embrayage au cours du temps, notamment pour tenir compte de son usure ou de l'environnement thermique, et le contrôle de cette conversion peut être effectué en déterminant si la consigne de déplacement ainsi générée est comprise dans une plage de valeurs de consigne de déplacement obtenue en convertissant la consigne de couple en consigne de position par un gabarit minimal et un gabarit maximal de conversion. Ces gabarits sont des cartographies statiques.

En variante ou en complément de ce qui précède, une étape de contrôle de la conformité du déplacement de l'actionneur électrique à la consigne de déplacement de cet actionneur peut être effectuée. En cas de réponse erronée, le mode de sécurité peut être appliqué. Cette étape de contrôle peut être effectuée en appliquant au moins un filtre à la consigne de déplacement de l'actionneur électrique, ce filtre représentant notamment la dynamique de l'actionneur électrique. Le mode de sécurité peut alors être appliqué en fonction du résultat de la comparaison entre le déplacement de l'actionneur et la réponse obtenue par traitement par ce filtre de la consigne de déplacement.

Le déplacement de l'actionneur électrique peut correspondre à la position de l'actionneur, cette position étant mesurée par un capteur ou étant fournie par un observateur à entrée inconnue.

La position mesurée peut être fournie à l'unité de pilotage de l'embrayage via un bus de communication. Ce bus de communication achemine par exemple cette mesure de position de l'actionneur depuis un capteur de position externe à l'unité de pilotage et indépendant de cette unité de pilotage. Un tel capteur de position est par exemple couplé à tout composant potentiellement présent dans la commande d'embrayage, par exemple la butée hydraulique de commande de l'embrayage, la fourchette, l'émetteur hydraulique de l'actionneur, ou encore avec tout autre composant de la commande d'embrayage tel que le récepteur hydraulique de l'actionneur, le réducteur, le moteur électrique d'actionneur, ou le système de transformation roto-linéaire de l'actionneur.

Lorsque la position de l'actionneur est fournie par un observateur à entrée inconnue, cet observateur peut recalculer le couple transmis par le moteur et transformer ce couple en position de l'actionneur via une cartographie forfaitaire.

En variante, le couple recalculé par cet observateur peut être comparé au couple estimé à partir de la position de l'actionneur obtenue via le capteur de position et de la cartographie évolutive.

Cet observateur peut utiliser comme entrée inconnue le couple transmis par l'embrayage et comme entrée connue le couple transmis par l'embrayage selon la cartographie. Cet observateur peut utiliser des équations dynamiques du moteur.

Lors de cette étape de contrôle de la conformité du déplacement de l'actionneur électrique à la consigne de déplacement de cet actionneur, deux filtres différents peuvent être utilisés, l'un de ces filtres correspondant par exemple à la dynamique basse de l'actionneur et l'autre de ces filtres correspondant alors à la dynamique haute de l'actionneur. La position de l'actionneur est alors comparée à l'application de chaque filtre à la consigne de l'actionneur.

En plus de la ou les étapes ci-dessus visant à détecter une défaillance dans la commande d'embrayage, l'unité de pilotage de l'embrayage peut mettre en oeuvre des boucles de contrôle, par exemple une boucle de contrôle de courant, imbriquée dans une boucle de contrôle de vitesse, elle-même imbriquée dans une boucle de contrôle de position.

Comme déjà mentionné, la détection de l'une des défaillances ci-dessus peut provoquer l'application du mode de sécurité. Le mode de sécurité peut consister à amener l'embrayage dans une position de sécurité dans laquelle le couple transmis est de 40 Nm en cas d'actionneur partiellement réversible, et ce passage dans la position de sécurité peut s'effectuer en moins d'une seconde, par exemple en une durée comprise entre 500 ms et 1 s, depuis la position de l'embrayage lors de la détection de cette défaillance.

Dans tout ce qui précède, l'unité de pilotage peut comprendre plusieurs modules de commande, chaque module étant par exemple formé par un ou plusieurs microcontrôleurs. En variante, l'unité de pilotage est par exemple formée par un seul module, tel qu'un microcontrôleur.

L'invention a encore pour objet, selon un autre de ses aspects, un ensemble comprenant :
- la commande d'embrayage ci-dessus,
- l'unité de contrôle moteur, et
- l'unité de contrôle de la transmission.

L'unité de pilotage de l'embrayage peut communiquer avec le TCU via une liaison comprenant une ligne de sécurité apte à transmettre un signal périodique, la non-réception par l'unité de pilotage de l'embrayage de ce signal périodique via cette ligne de sécurité provoquant l'arrêt de l'alimentation électrique du moteur d'actionneur. Ainsi, cette ligne de sécurité permet d'appliquer le mode de sécurité.

Le signal périodique est par exemple une succession de fronts montants et de fronts descendants, et l'absence de période détectée pour ces fronts montants et descendants provoque l'arrêt de l'alimentation électrique du moteur d'actionneur via l'ouverture des cellules de commutation commandables du convertisseur statique à travers lequel s'effectue cette alimentation électrique. Une telle ligne de sécurité permet d'utiliser un microcontrôleur à coeur simple pour réaliser l'unité de pilotage de l'embrayage, sans avoir recours à un microcontrôleur à double coeur ou à deux microcontrôleurs. Une telle ligne de sécurité peut ainsi permettre un passage dans le mode de sécurité avec une électronique particulièrement simple..

La liaison entre le TCU et l'unité de pilotage de l'embrayage peut comprendre un bus de communication, et un système de détection d'une défaillance de ce bus de communication peut être prévu. La détection d'une telle défaillance peut provoquer la non-émission par le TCU du signal périodique sur la ligne de sécurité, et ainsi l'arrêt de l'alimentation électrique du moteur d'actionneur.

Ce système de détection met par exemple en oeuvre un compteur actif dans les trames acheminées par la liaison. Un compteur cyclique périodique est par exemple généré par le TCU et transmis par la liaison à l'unité de pilotage de l'embrayage. L'unité de pilotage peut alors recopier la valeur du compteur reçue du TCU et la renvoyer au TCU, ce dernier vérifiant alors l'exactitude de la valeur du compteur reçue. Lorsque la valeur renvoyée au TCU est exacte, une variable peut être décrémentée tandis que cette variable est incrémentée dans le cas inverse. Lorsque la valeur de cette variable dépasse un seuil prédéfini, la liaison peut être déclarée comme étant défaillante et le signal non-périodique précité peut alors être émis pour provoquer le passage au mode de sécurité.

Dans tout ce qui précède, l'embrayage peut être à commande électrique ou automatique. Un tel embrayage, encore appelé « clutch by wire » peut le cas échéant être dépourvu de pédale d'actionnement, l'action de débrayage pouvant être commandée par la manoeuvre du levier de vitesses à l'aide d'un capteur de position.

L'invention pourra être mieux comprise à la lecture de la description qui va suivre d'exemples non limitatifs de mise en oeuvre de celle-ci et à l'examen du dessin annexé sur lequel :
- la figure 1 représente de façon schématique un exemple d'environnement dans lequel peut être mise en oeuvre l'invention,
- la figure 2 représente de façon schématique une commande d'embrayage selon un exemple de mise en oeuvre de l'invention,
- la figure 3 représente, en fonction de la position de l'embrayage, sur la courbe du haut l'effort de frottement exercé par l'actionneur électrique sur l'embrayage et sur la courbe du bas le couple transmis par l'embrayage,
- la figure 4 représente de façon schématique la commande mise en oeuvre par l'unité de pilotage,
- la figure 5 représente de façon schématique la commande d'embrayage, l'unité de contrôle moteur et l'unité de contrôle de la transmission,
- la figure 6 représente le moteur électrique d'actionneur et le convertisseur statique associé à ce moteur lorsque le mode de sécurité est appliqué, et
- les figures 7 et 8 représentent différentes possibilités pour disposer un capteur permettant de mesurer la position de l'actionneur électrique.

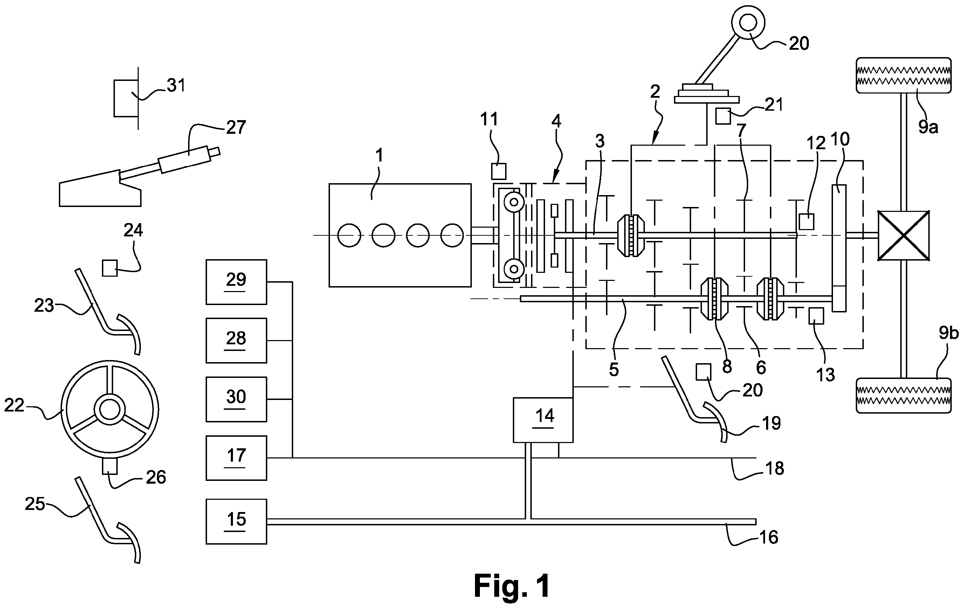

On a représenté de façon schématique sur la figure 1 un exemple de véhicule dans lequel le procédé selon l'invention peut être mis en oeuvre.

Le véhicule automobile, représenté sur cette figure, comporte un moteur thermique 1 dont l'arbre de sortie ou vilebrequin est relié à un arbre d'entrée 3 d'une boîte de vitesses 2 via un embrayage 4. De manière classique, la transmission de couple entre le vilebrequin et l'arbre d'entrée 3 de la boîte de vitesses 2 est assurée lorsque l'embrayage 4 est dans une position embrayée et cette transmission est interrompue lorsque l'embrayage 4 est dans une position débrayée. L'embrayage 4 est ici un embrayage simple de type normalement ouvert.

Selon un mode de réalisation, l'embrayage 4 comporte un plateau de réaction solidaire en rotation du vilebrequin du moteur à combustion 1, un disque de friction équipé d'un moyen cannelé coopérant avec des cannelures formées sur l'arbre d'entrée de la boîte de vitesses et un mécanisme d'embrayage. Le mécanisme d'embrayage comporte un plateau de pression mobile, un couvercle fixé sur le plateau de réaction, et un diaphragme monté, d'une part, basculant contre le fond du couvercle, et d'autre part, en appui contre un plateau de pression. Le diaphragme sollicite le plateau de pression en direction du plateau de réaction.

Un organe d'actionnement, tel qu'une butée de commande, est apte à agir sur le diaphragme afin de le faire basculer et déplacer ainsi le plateau de pression entre une position embrayée, dans laquelle le disque de friction est pincé entre le plateau de pression et le plateau de réaction afin de permettre une transmission du couple moteur du vilebrequin vers l'arbre d'entrée de la boîte de vitesses, et une potion débrayée dans laquelle le plateau de pression est écarté du disque de friction.

Toujours en référence à la figure 1, on observe que la boîte de vitesses 2 comporte un arbre de sortie 5, parallèle à l'arbre d'entrée 3, qui est équipé de pignons fous 6 coopérant avec des pignons de vitesses 7 portés par l'arbre d'entrée 3. L'arbre de sortie 5 porte des synchroniseurs 8 permettant de solidariser en rotation les pignons fous 6 à l'arbre de sortie 5, de sorte à engager un rapport de transmission entre l'arbre d'entrée 3 et l'arbre de sortie 5 de la boîte de vitesses. L'arbre de sortie 5 coopère avec un pignon 10 d'entrée du différentiel afin de transmettre le couple aux roues 9a, 9b. Un levier de vitesses 20 forme un organe de changement de rapports de la boîte de vitesses 2 et permet de sélectionner et d'engager manuellement les synchroniseurs 8. Le levier de vitesses 20 est associé à un capteur de position 21 permettant de détecter le rapport sélectionné ainsi qu'un changement de rapport.

Par ailleurs, le véhicule est équipé de nombreux capteurs, tels qu'un capteur 11 de mesure du régime moteur, un capteur 12 de mesure de la vitesse de rotation de l'arbre d'entrée 3 de la boite de vitesses 2 et/ou un capteur 13 de mesure de la vitesse de rotation de l'arbre de sortie 5 de la boîte de vitesses 2.

Le véhicule automobile comporte en outre un volant 22, une pédale 23 de frein associée à un capteur 24 apte à délivrer un signal représentatif de la position de la pédale de frein, un module de pilotage du freinage du type ABS 28, une pédale 25 d'accélérateur associée à un capteur de position 26 de la pédale d'accélérateur, un frein de stationnement 27, un module de gestion du frein de stationnement 29 et un module d'assistance au parcage automatique 30.

Dans le mode de réalisation représenté, le véhicule est en outre équipé d'un moyen de sélection 31 permettant notamment au conducteur de choisir s'il souhaite bénéficier d'un, de plusieurs ou de la totalité des modes de pilotage proposés. Le moyen de sélection 31 peut être un commutateur disposé sur le tableau de bord et/ou un panneau de configuration comportant un menu accessible via une interface électronique du contrôle de bord et autorisant une sélection des options à la demande du conducteur. Dans un mode de réalisation, les options des modes de pilotage sont également configurables par l'intermédiaire d'une application apte à communiquer avec une application dédiée d'un dispositif télématique/téléphonique distant, du type « Smartphone ».

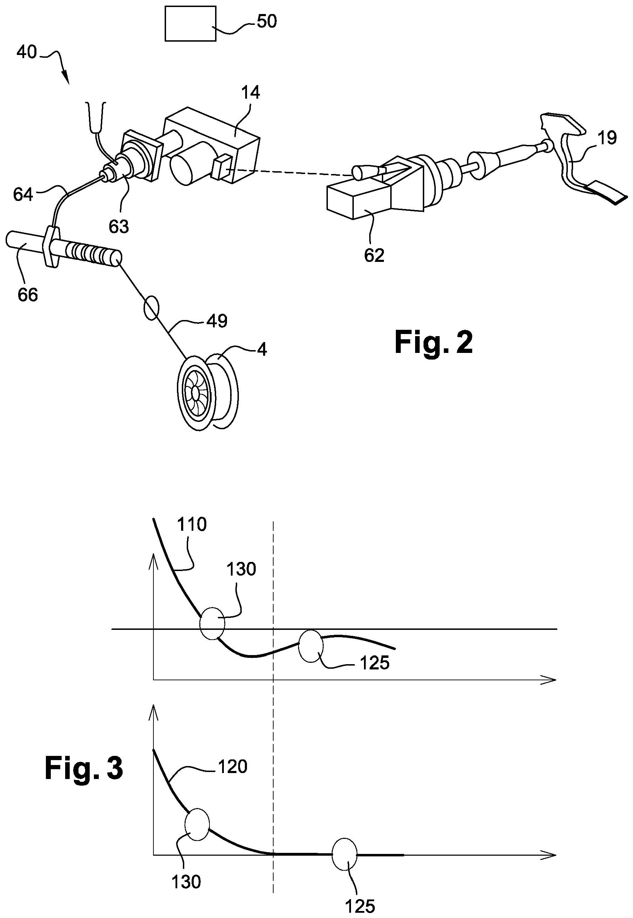

On va maintenant décrire en référence à la figure 2 un exemple de commande d'embrayage 40 selon l'invention. La commande d'embrayage 40 comprend outre l'embrayage 4 :
- une pédale d'embrayage 19,
- un actionneur électrique 14, dont le déplacement permet de modifier la position de l'embrayage 4, par exemple en déplaçant une fourchette 49, et
- une unité de pilotage 50 de l'embrayage 4, générant des consignes visant à modifier la position de l'embrayage 4, notamment en réponse à une action de l'utilisateur du véhicule sur la pédale d'embrayage 19.

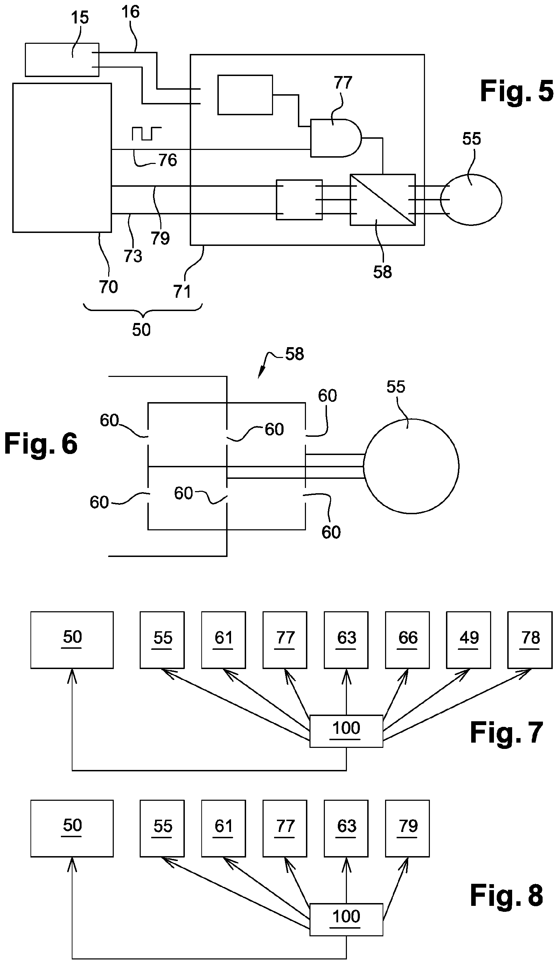

Comme on peut le voir notamment sur les figures 5 et 6, l'actionneur électrique 14 comprend un moteur électrique d'actionneur 55, ce dernier étant alimenté depuis une source d'énergie électrique autonome 15 telle que la batterie du véhicule via un réseau électrique 16 comprenant un convertisseur statique 58.

Le moteur électrique d'actionneur 55 est par exemple un moteur à courant alternatif, tel qu'un moteur synchrone de type brushless, auquel cas le convertisseur statique 58 est alors un convertisseur de tension continu/alternatif. Ce convertisseur statique 58 met ici en oeuvre une pluralité de cellules de commutation commandables 60, par exemple de transistors de puissance.

Dans l'exemple considéré, la pédale d'embrayage 19 coopère avec un simulateur d'effort 62 exerçant un effort de réaction apte à s'opposer à l'appui sur la pédale d'embrayage 19. L'appui sur la pédale d'embrayage exerce un effort traduit par le simulateur d'effort 62 en une consigne de pilotage de l'actionneur électrique 14. En variante, la pédale d'embrayage 19 et l'actionneur électrique 14 peuvent agir en parallèle.

Le moteur électrique d'actionneur 55 déplace, via un réducteur 61, un piston d'un émetteur hydraulique 63 de manière à envoyer du fluide sous pression dans une conduite hydraulique 64 vers un récepteur hydraulique 66 lorsque l'on cherche à mettre l'embrayage 4 en position débrayée. Ce déplacement initié par le moteur électrique d'actionneur 55 provoque alors un déplacement de la fourchette 49.

La commande 40 peut encore comprendre un capteur de position 20, visible sur la figure 1, associé à la pédale d'embrayage 19, et apte à délivrer un signal représentatif de la position de cette pédale 19. Cette information peut être utilisée par l'unité de pilotage 50 pour commander l'actionneur électrique 14. Le capteur de position 20 est par exemple un capteur à contact comportant une tige mobile en contact avec la pédale d'embrayage 19. Toutefois, le capteur de position 20 peut être est un capteur de proximité, sans contact. Le capteur de position 20 peut être fixé sur le châssis du véhicule et permet ainsi de délivrer un signal représentatif de la position absolue de la pédale 19, c'est à dire de la position de la pédale par rapport au châssis. Le capteur de position 20 peut encore être agencé de manière à délivrer un signal représentatif de la position relative de la pédale 19, c'est à dire de la position de la pédale 19 par rapport à un organe d'appui monté pivotant sur le châssis.

Un exemple de mise en oeuvre de l'unité de pilotage 50 va maintenant être décrit.

Selon l'exemple de la figure 5, cette unité de pilotage 50 est formée par un module 71. Ce module 71 communique avec un module 70 qui schématise l'unité de contrôle moteur (ECU) et l'unité de contrôle de la transmission (TCU) du véhicule. Le module 71 formant l'unité de pilotage de l'embrayage 4 comprend ici un microcontrôleur 75 qui est ici un microcontrôleur à coeur simple Comme représenté sur la figure 5, le microcontrôleur 75 pilote par exemple le convertisseur statique 58.

On constate également sur la figure 5 que la liaison 73 entre l'unité de pilotage 71 et le bloc 70 peut comprendre une ligne de sécurité 76 apte à transmettre un signal périodique, le rôle de cette ligne de sécurité 76 qui est reçue par une porte logique 77 de l'unité de pilotage 71 étant expliqué ultérieurement. Le signal périodique est ici une succession de fronts montants et de fronts descendants.

Cette liaison 73 peut comprendre un bus de communication 79, et un système de détection d'une défaillance de ce bus de communication 79.

Cette détection de défaillance met par exemple en oeuvre un compteur actif dans les trames acheminées par la liaison 73. Un compteur cyclique périodique est par exemple généré par le bloc 70 et transmis par la liaison 73 à l'unité de pilotage 71 de l'embrayage 4. Cette unité de pilotage 71 peut alors recopier la valeur du compteur reçue du bloc 70 et la renvoyer au bloc 70, ce dernier vérifiant alors l'exactitude de la valeur du compteur reçue. Lorsque la valeur renvoyée au bloc 70 est exacte, une variable peut être décrémentée tandis que cette variable est incrémentée dans le cas inverse. Lorsque la valeur de cette variable dépasse un seuil prédéfini, la liaison peut être déclarée comme étant défaillante.

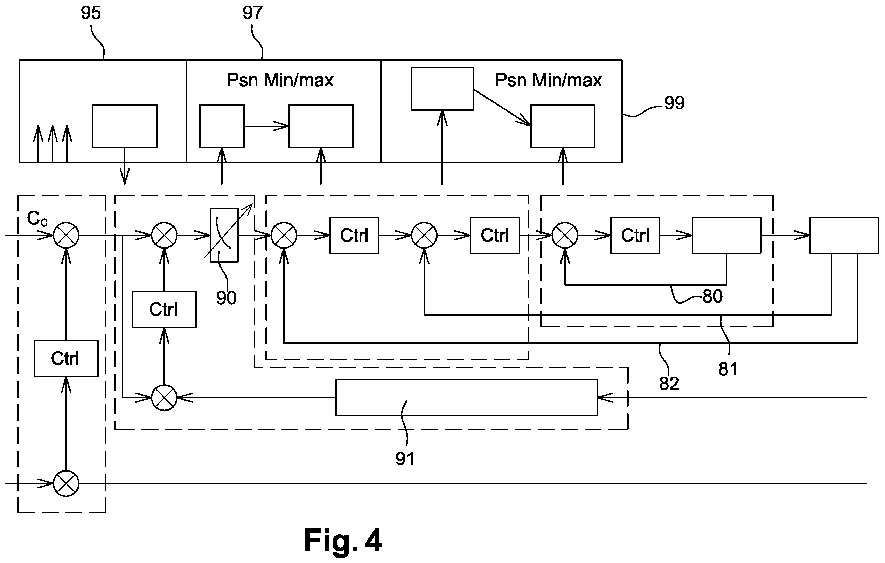

L'unité de pilotage 50 peut mettre en oeuvre la commande représenté sur la figure 4. Dans l'exemple de cette figure, toute cette commande est réalisée par l'unité de pilotage 50 mais, dans une autre variante, une partie de cette commande est réalisée par le bloc 70 tandis que l'autre partie de cette commande est réalisée par l'unité de pilotage 50.

Plusieurs boucles de contrôle sont ainsi exécutées, afin de commander l'actionneur électrique 14. Dans l'exemple décrit, l'unité de pilotage 50 de l'actionneur électrique 14 met en oeuvre une boucle de contrôle de courant 80, imbriquée dans une boucle de contrôle de vitesse 81, elle-même imbriquée dans une boucle de contrôle de position 82.

On constate sur la figure 4 que la boucle de position 82 est disposée en aval d'un bloc de cartographie 90. Cette cartographie 90 utilise comme entrée, la somme :
- d'une consigne corrigée de couple à transmettre par l'embrayage 4 et,
- du couple corrigé transmis par le moteur, ce couple corrigé étant obtenu à partir de la valeur de couple transmis par le moteur qui est calculée par un observateur 91 à entrée inconnue qui utilise des équations dynamiques du moteur.

La consigne corrigée de couple à transmettre par l'embrayage précitée est ici obtenue en sommant la consigne de couple Cc issue du premier module de commande 70 et la somme corrigée de la consigne de vitesse de glissement de l'embrayage et de la vitesse de glissement de l'embrayage.

En plus de ces différentes boucles de contrôle, l'unité de pilotage 50 met en oeuvre dans l'exemple décrit plusieurs étapes de contrôle, de manière à détecter une défaillance dans la commande d'embrayage 40, que cette défaillance concerne l'électronique de puissance, c'est-à-dire le réseau électrique 16 ou le convertisseur statique 48, ou que cette défaillance concerne l'électronique de pilotage c'est-à-dire le bloc 70, le module 71 formant l'unité de pilotage 50 ou la liaison 73 entre ces derniers.

Trois étapes de contrôle sont ici effectuées afin de détecter une telle défaillance.

Une première étape est par exemple exécutée par un bloc 95, cette étape visant à contrôler la consigne de couple d'embrayage à appliquer à l'embrayage. La consigne de couple d'embrayage contrôlée provient par exemple du bloc 70, c'est-à-dire soit de l'ECU, soit du TCU.

Lors de cette étape, la consigne de couple est dupliquée deux fois, de manière à ce que trois traitements de cette consigne de couple puissent être effectués indépendamment.

Les trois valeurs ainsi obtenues de consigne de couple sont alors traitées indépendamment dans trois adresses mémoire distinctes. Un vote de cohérence entre ces valeurs permet de déterminer si le consigne est erronée ou non.

Une deuxième étape consiste à contrôler la conversion de la consigne de couple d'embrayage en une consigne de déplacement de l'actionneur électrique 14. Cette étape est ici exécutée par un bloc 97. La conversion de la consigne de couple d'embrayage en une consigne de déplacement de l'actionneur est effectuée à l'aide d'une cartographie évolutive, et le contrôle de cette conversion peut être effectué en déterminant si la consigne de déplacement ainsi générée est comprise dans une plage de valeurs de consigne de déplacement obtenue en convertissant la consigne de couple en position par un gabarit minimal et un gabarit maximal de conversion.

Une troisième étape consiste à contrôler que le déplacement de l'actionneur électrique 14 est conforme à la consigne de déplacement de cet actionneur. Cette étape est exécutée par un bloc 99. Lors de cette étape, deux filtres différents peuvent être utilisés, l'un de ces filtres correspondant par exemple à la dynamique basse de l'actionneur électrique 14 et l'autre de ces filtres correspondant alors à la dynamique haute de l'actionneur électrique 14. La position de l'actionneur électrique 14 est alors comparée à l'application de chaque filtre à la consigne de déplacement de l'actionneur.

Pour réaliser cette comparaison, on peut utiliser la position de l'actionneur électrique 14 fournie par un capteur de position 100 externe à l'unité de pilotage de l'embrayage et fournie à cette unité de pilotage 50. Ce capteur de position 100 peut, comme représenté sur les figures 7 et 8, être placé sur un composant la commande d'embrayage 40, par exemple couplé au moteur électrique d'actionneur 55, au réducteur 61, au système de transformation roto-linéaire 70 du mouvement du moteur électrique d'actionneur 55 lorsqu'un tel système existe, à l'émetteur hydraulique 63, au récepteur hydraulique 66, à la fourchette 49 ou encore à la butée de commande 78 déplacée par cette fourchette 49.

Lorsque le commande hydraulique 40 est dépourvue de récepteur hydraulique, de fourchette et de butée de commande mais comprend à la place de ces éléments une butée de commande hydraulique, le capteur de position 100 peut être couplé à cette butée hydraulique 79 ou à ceux des composants précités de la commande d'embrayage 40 qui restent présents.

En variante, plutôt que d'avoir recours à un capteur de position de l'actionneur électrique 14, la position de cet actionneur utilisée par le bloc 99 peut être fournie par un observateur à entrée inconnue autre que l'observateur 91 déjà décrit en référence à la figure 5.

Selon l'invention, la détection d'une défaillance conduit l'unité de pilotage 50 à appliquer un mode de sécurité visant à empêcher le passage en position embrayée de l'embrayage 4 lorsqu'un tel passage en position embrayée correspond du fait de cette défaillance à un couple transmis par l'embrayage supérieur à une valeur prédéfinie. Cette valeur prédéfinie correspond par exemple au couple maximal transmissible par les roues du véhicule étant donné le rapport de boîte de vitesses engagé et la vitesse de ce véhicule.

Ce mode de sécurité consiste à arrêter l'alimentation électrique du moteur électrique d'actionneur 55 pour que l'embrayage vienne occuper une position de sécurité. Dans l'exemple décrit, l'actionneur électrique 14 est partiellement réversible et le couple qu'il transmet dans la position de sécurité est déterminé par les forces de frottement statique exercées par l'actionneur électrique 14 sur cet embrayage 4.

Cette position de sécurité est ici une position d'équilibre entre la force de rappel tendant à ramener l'embrayage en position embrayée et les forces de frottement suivantes :
- frottements internes du moteur électrique d'actionneur 55,
- frottements de guidage des éléments mobiles du réducteur 61,
- frottements de guidage des éléments mobiles du système de transformation roto-linéaire 70,
- frottements du piston et des joints de l'émetteur hydraulique 63,
- frottements du fluide hydraulique échangé entre l'émetteur hydraulique 63 et le récepteur hydraulique 66 sur les parois de l'émetteur hydraulique 63, sur le piston de cet émetteur hydraulique 63, sur les parois du récepteur hydraulique 66, sur le piston de ce récepteur hydraulique 66, ou encore sur les parois de la conduite hydraulique 64 reliant cet émetteur hydraulique 63 et ce récepteur hydraulique 66,
- frottements de guidage de la fourchette 49,
- frottements de guidage de la butée de commande 78 ou 79.

Le mode de sécurité consiste dans l'exemple décrit à amener l'embrayage 4 dans une position de sécurité dans laquelle le couple transmis est de 40 Nm, et ce passage dans la position de sécurité peut s'effectuer en moins d'une seconde, par exemple en une durée comprise entre 500 ms et 1 s, depuis la position de l'embrayage 4 lors de la détection de cette défaillance.

La figure 3 représente selon une courbe 110 l'effort de frottement exercé par l'embrayage 4 sur l'actionneur électrique 14 en fonction de la position de cet embrayage 4, et selon une courbe 120 le couple transmis par l'embrayage 4 en fonction de sa position.

Cette figure 3 montre en 125 le cas correspondant à la position débrayée de l'embrayage et en 130 le cas correspondant à la position de sécurité de l'embrayage 4. On constate que la position de sécurité 130 est déterminée par les forces de frottement précitées.

L'invention n'est pas limitée aux exemples qui viennent d'être décrits.

## Revendications

1. Commande d'embrayage (40) de type normalement ouvert, comprenant :
- une pédale d'embrayage (19),
- l'embrayage (4),
- un actionneur électrique (14), dont le déplacement permet de modifier la position de l'embrayage (4), cet actionneur électrique (14) comprenant un moteur électrique d'actionneur (55), et
- une unité de pilotage (50) de l'embrayage (4), générant des consignes visant à modifier la position de l'embrayage (4), notamment en réponse à une action de l'utilisateur du véhicule sur la pédale d'embrayage (19),
l'unité de pilotage (50) étant configurée pour appliquer un mode de sécurité visant à empêcher le passage en position embrayée de l'embrayage (4) lorsqu'une défaillance prédéfinie dans la commande d'embrayage est détectée, **caractérisé en ce que** ce mode de sécurité comprend l'arrêt de l'alimentation électrique du moteur électrique d'actionneur (55) pour que l'embrayage (4) occupe une position de sécurité étant la position débrayée ou une position dans laquelle le couple qu'il transmet est déterminé par les forces de frottement statique exercées par l'actionneur électrique (14) sur cet embrayage (4).

2. Commande d'embrayage selon la revendication 1, la défaillance dans la commande d'embrayage étant détectée via au moins une étape de contrôle.

3. Commande selon la revendication 2, l'étape de contrôle comprenant un contrôle de la consigne de couple d'embrayage à appliquer à l'embrayage (4), et l'unité de pilotage (50) appliquant le mode de sécurité en cas de détection d'une consigne de couple erronée.

4. Commande selon la revendication 3, le contrôle de la consigne de couple d'embrayage à appliquer à l'embrayage (4) consistant à reproduire deux fois la consigne de couple et à traiter les trois valeurs ainsi obtenues indépendamment dans trois adresses mémoire distinctes puis à procéder à un vote de cohérence entre ces valeurs pour déterminer si la consigne de couple d'embrayage est erronée ou non.

5. Commande selon l'une quelconque des revendications 2 à 4, l'étape de contrôle comprenant un contrôle de la conversion de la consigne de couple d'embrayage en une consigne de déplacement de l'actionneur électrique (14), et l'unité de pilotage (50) appliquant le mode de sécurité en cas de détection d'une conversion erronée de cette consigne de couple.

6. Commande selon la revendication 5, la conversion de la consigne de couple d'embrayage en une consigne de déplacement de l'actionneur électrique (14) étant effectuée à l'aide d'une cartographie évolutive, et le contrôle de cette conversion étant effectué en déterminant si la consigne de déplacement ainsi générée est comprise dans une plage de valeurs de consigne de déplacement obtenue en convertissant la consigne de couple en consigne de position par un gabarit minimal et un gabarit maximal de conversion.

7. Commande selon l'une quelconque des revendications 2 à 6, l'étape de contrôle comprenant un contrôle de la conformité du déplacement de l'actionneur électrique (14) à la consigne de déplacement de cet actionneur, et l'unité de pilotage (50) appliquant le mode de sécurité en cas de détection d'une déplacement erroné de l'actionneur électrique (14).

8. Commande selon la revendication 7, le contrôle du déplacement de l'actionneur électrique (14) étant effectué en appliquant au moins un filtre à la consigne de déplacement de l'actionneur électrique, ce filtre représentant notamment la dynamique de l'actionneur électrique.

9. Commande selon la revendication 7 ou 8, le déplacement de l'actionneur électrique (14) correspondant à la position de cet actionneur, cette position étant mesurée par un capteur (100) ou étant fournie par un observateur à entrée inconnue.

10. Ensemble comprenant :
- la commande d'embrayage (40) selon l'une quelconque des revendications précédentes,
- l'unité de contrôle moteur (70), et
- l'unité de contrôle de la transmission (70),
l'unité de pilotage de l'embrayage (50) communicant avec l'unité de contrôle de la transmission (70) via une liaison (73) comprenant une ligne de sécurité (76) apte à transmettre un signal périodique, la non-réception par l'unité de pilotage de l'embrayage (50) de ce signal périodique via cette ligne de sécurité (76) provoquant l'arrêt de l'alimentation électrique du moteur électrique d'actionneur (55).

11. Ensemble selon la revendication 10, le signal périodique étant une succession de fronts montants et de fronts descendants, et l'absence de période détectée pour ces fronts montants et descendants provoquant l'arrêt de l'alimentation électrique du moteur électrique d'actionneur (55).

12. Ensemble selon la revendication 10 ou 11, la liaison (73) entre l'unité de contrôle de la transmission (70) et l'unité de pilotage de l'embrayage (50) comprenant un bus de communication (79) et un système de détection d'une défaillance de ce bus de communication (79).

## Patentansprüche

1. Kupplungssteuerung (40) vom Typ normalerweise offen, umfassend:
- ein Kupplungspedal (19),
- die Kupplung (4),
- einen elektrischen Aktuator (14), dessen Verschiebung es ermöglicht, die Position der Kupplung (4) zu verändern, wobei dieser Aktuator (14) einen Aktuator-Elektromotor (55) umfasst, und
- eine Steuereinheit (50) der Kupplung (4), die Sollwerte erzeugt, die die Position der Kupplung (4) verändern sollen, insbesondere als Antwort auf eine Betätigung des Kupplungspedals (19) durch den Benutzer des Fahrzeugs,
wobei die Steuereinheit (50) dazu vorgesehen ist, einen Sicherheitsmodus anzuwenden, der den Übergang der Kupplung (4) in die eingekuppelte Position verhindern soll, wenn ein vordefinierter Fehler in der Kupplungssteuerung erfasst wird, **dadurch gekennzeichnet, dass** dieser Sicherheitsmodus die Einstellung der elektrischen Versorgung des Aktuator-Elektromotors (55) umfasst, damit die Kupplung (4) eine Sicherheitsposition, die die entkuppelte Position ist, oder eine Position einnimmt, in der das Moment, das sie überträgt, durch die statischen Reibungskräfte, die vom elektrischen Aktuator (14) auf diese Kupplung (4) ausgeübt werden, bestimmt wird.

2. Kupplungssteuerung nach Anspruch 1, wobei der Fehler in der Kupplungssteuerung über mindestens einen Kontrollschritt erfasst wird.

3. Steuerung nach Anspruch 2, wobei der Kontrollschritt eine Kontrolle des Sollwerts eines Kupplungsmoments, das an die Kupplung (4) anzulegen ist, umfasst, und wobei die Steuereinheit (50) den Sicherheitsmodus im Falle der Erfassung eines falschen Momentsollwerts anwendet.

4. Steuerung nach Anspruch 3, wobei die Kontrolle des Sollwerts eines Kupplungsmoments, das an die Kupplung (4) anzulegen ist, darin besteht, zweimal den Momentsollwert zu reproduzieren und die drei auf diese Weise erhaltenen Werte unabhängig in drei getrennten Speicheradressen zu bearbeiten, dann ein Kohärenzvotum zwischen diesen Werten vorzunehmen, um zu bestimmen, ob der Kupplungsmomentsollwert falsch ist oder nicht.

5. Steuerung nach einem der Ansprüche 2 bis 4, wobei der Kontrollschritt eine Kontrolle der Umwandlung des Kupplungsmomentsollwerts in einen Verschiebungswert des elektrischen Aktuators (14) umfasst, und wobei die Steuereinheit (50) den Sicherheitsmodus im Falle der Erfassung einer falschen Umwandlung dieses Momentsollwerts anwendet.

6. Steuerung nach Anspruch 5, wobei die Umwandlung des Kupplungsmomentsollwerts in einen Verschiebungssollwert des elektrischen Aktuators (14) mit Hilfe einer evolutiven Kartografie erfolgt, und die Kontrolle dieser Umwandlung erfolgt, wobei bestimmt wird, ob der auf diese Weise erzeugte Verschiebungssollwert in einem Wertebereich von Verschiebungssollwerten enthalten ist, der durch Umwandlung des Drehmomentsollwerts in einen Positionssollwert durch einen Minimalumwandlungsraster und einen Maximalumwandlungsraster erhalten wird.

7. Steuerung nach einem der Ansprüche 2 bis 6, wobei der Kontrollschritt eine Kontrolle der Konformität der Verschiebung des elektrischen Aktuators (14) mit dem Verschiebungssollwert dieses Aktuators umfasst, und die Steuereinheit (50) den Sicherheitsmodus im Falle einer Erfassung einer falschen Verschiebung des elektrischen Aktuators (14) anwendet.

8. Steuerung nach Anspruch 7, wobei die Kontrolle der Verschiebung des elektrischen Aktuators (14) durch Anlegen mindestens eines Filters an den Verschiebungssollwert des elektrischen Aktuators erfolgt, wobei dieser Filter insbesondere die Dynamik des elektrischen Aktuators darstellt.

9. Steuerung nach Anspruch 7 oder 8, wobei die Verschiebung des elektrischen Aktuators (14) der Position dieses Aktuators entspricht, wobei diese Position durch einen Sensor (100) gemessen oder von einem Beobachter mit unbekanntem Eingang geliefert wird.

10. Einheit, umfassend:
- die Kupplungssteuerung (40) nach einem der vorhergehenden Ansprüche,
- die Motorkontrolleinheit (70), und
- die Kontrolleinheit der Übertragung (70),
wobei die Steuereinheit der Kupplung (50) mit der Kontrolleinheit der Übertragung (70) über eine Verbindung (73) kommuniziert, umfassend eine Sicherheitsleitung (76), die geeignet ist, ein periodisches Signal zu übertragen, wobei der Nicht-Empfang dieses periodischen Signals durch die Steuereinheit der Kupplung (50) über diese Sicherheitsleitung (76) zur Einstellung der elektrischen Versorgung des Aktuator-Elektromotors (55) führt.

11. Einheit nach Anspruch 10, wobei das periodische Signal eine Aufeinanderfolge von aufsteigenden Fronten und absteigenden Fronten ist, und das Nichtvorhandensein einer für diese aufsteigenden und absteigenden Fronten erfassten Periode zur Einstellung der elektrischen Versorgung des Aktuator-Elektromotors (55) führt.

12. Einheit nach Anspruch 10 oder 11, wobei die Verbindung (73) zwischen der Kontrolleinheit der Übertragung (70) und der Steuereinheit der Kupplung (50) einen Kommunikationsbus (79) und ein System zur Erfassung eines Ausfalls dieses Kommunikationsbusses (79) umfasst.

## Claims

1. Clutch control (40) for a clutch of the normally open type, comprising:
- a clutch pedal (19),
- the clutch (4),
- an electric actuator (14), the movement of which allows the position of the clutch (4) to be modified, this electrical actuator (14) comprising an actuator electric motor (55), and
- a clutch operating unit (50) for the clutch (4), generating instructions aimed at modifying the position of the clutch (4), notably in response to action by the user of the vehicle on the clutch pedal (19),
the operating unit (50) being configured to apply a safety mode aimed at preventing the clutch (4) from passing into the engaged position when a predefined failure in the clutch control is detected, **characterized in that** the safety mode comprises shutting off the electrical power supply to the actuator electric motor (55) so that the clutch (4) occupies a safety position which is the disengaged position or a position in which the torque it transmits is determined by the static friction forces applied by the electric actuator (14) to this clutch (4) .

2. Clutch control according to Claim 1, the failure in the clutch control being detected via at least one test step.

3. Control according to Claim 2, the test step comprising testing the clutch torque instruction to be applied to the clutch (4), and the operating unit (50) applying the safety mode if an erroneous torque instruction is detected.

4. Control according to Claim 3, the test of the clutch torque instruction to be applied to the clutch (4) consisting in reproducing the torque instruction twice and in processing the three values thus obtained independently in three distinct memory addresses then in proceeding to take a vote on the coherency between these values in order to determine whether or not the clutch torque instruction is erroneous.

5. Control according to any one of Claims 2 to 4, the test step comprising a test on the conversion of the clutch torque instruction into an instruction to move the electric actuator (14), and the operating unit (50) applying the safety mode if an erroneous conversion of this torque instruction is detected.

6. Control according to Claim 5, the conversion of the clutch torque instruction into an instruction to move the electric actuator (14) being performed with the aid of a developing map and the test on this conversion being performed by determining whether the movement instruction thus generated is comprised within a range of movement-instruction values which range is obtained by converting the torque instruction into a position instruction against a minimum conversion template and a maximum conversion template.

7. Control according to any one of Claims 2 to 6, the test step comprising a test on the conformity of the movement of the electric actuator (14) with respect to the movement instruction for this actuator, and the operating unit (50) applying the safety mode if erroneous movement of the electric actuator (14) is detected.

8. Control according to Claim 7, the test on the movement of the electric actuator (14) being carried out by applying at least one filter to the instruction to move the electric actuator, this filter notably representing the dynamic range of the electric actuator.

9. Control according to Claim 7 or 8, the movement of the electric actuator (14) corresponding to the position of this actuator, this position being measured by a sensor (100) or being supplied by an unknown-input observer.

10. Assembly comprising:
- clutch control (40) according to any one of the preceding claims,
- the engine control unit (70), and
- the transmission control unit (70),
the clutch operating unit (50) communicating with the transmission control unit (70) via a link (73) comprising a safety line (76) able to transmit a periodic signal, non-receipt by the clutch operating unit (50) of this periodic signal via this safety line (76) giving rise to the shutting-off of the electrical power supply to the actuator electric motor (55).

11. Assembly according to Claim 10, the periodic signal being a succession of rising wavefronts and falling wavefronts, and the absence of period detected for these rising and falling wavefronts giving rise to the shutting-off of the electrical power supply to the actuator electric motor (55).

12. Assembly according to Claim 10 or 11, the link (73) between the transmission control unit (70) and the clutch operating unit (50) comprising a communication bus (79) and a system for detecting failure of this communication bus (79).
